# EUROPÄISCHE PATENTSCHRIFT

(11) **EP 2 859 195 B1**
(45) Veröffentlichungstag und Bekanntmachung des Hinweises auf die Patenterteilung: **07.09.2016**
(21) Anmeldenummer: 13731061.1
(22) Anmeldetag: 13.06.2013
(51) Int. Cl.: F02C 9/00, F01K 7/24, F01K 23/10

(54) **VERFAHREN ZUR STÜTZUNG EINER NETZFREQUENZ**
METHOD FOR SUPPORTING A NETWORK FREQUENCY
PROCÉDÉ DESTINÉ AU SOUTIEN D'UNE FRÉQUENCE DU RÉSEAU

(30) Priorität: 12.07.2012 EP 12176050
(43) Veröffentlichungstag der Anmeldung: 15.04.2015
(73) Patentinhaber: Siemens Aktiengesellschaft, 80333 München (DE)
(72) Erfinder: BENNAUER, Martin, 46242 Bottrop (DE); GOBRECHT, Edwin, 40885 Ratingen (DE); HEUE, Matthias, 44879 Bochum (DE)
(86) Internationale Anmeldenummer: PCT/EP2013/062202
(87) Internationale Veröffentlichungsnummer: WO 2014/009092

(56) Entgegenhaltungen:
- EP-A1- 2 098 691
- DE-A1-102008 037 579
- DE-A1-102009 026 324

## Beschreibung

Die Erfindung betrifft ein Verfahren zur Stützung einer Netzfrequenz einer Energieerzeugungsanlage umfassend eine Dampfturbine, wobei die Dampfturbine eine Hochdruck-Teilturbine und eine Mitteldruck-Teilturbine umfasst, wobei vor der Mitteldruck-Teilturbine ein Mitteldruck-Ventil angeordnet wird.

Gas- und Dampfturbinenkraftwerke als Ausführungsform einer Energieerzeugungsanlage umfassen in der Regel eine Gasturbine, eine Dampfturbine und einen Generator, der drehmomentgekoppelt mit der Gasturbine und Dampfturbine verbunden ist. Im Bereich der kommunalen Energieversorgung werden bei solchen Gas- und Dampfturbinenkraftwerken die Gasturbinen vorwiegend zur Unterstützung der Netzfrequenz herangezogen. Dies wird derart realisiert, dass bei steigender Netzfrequenz die Leistung der Gasturbine reduziert und bei fallender Netzfrequenz die Leistung der Gasturbine gesteigert wird. Im Wesentlichen folgt die Leistung der Dampfturbine der Leistung der Gasturbine mit einer gewissen Verzögerung, die mit der Trägheit des Dampferzeugers zusammenhängt. Dadurch beteiligt sich die Dampfturbine nicht aktiv an der Frequenzstützung.

Dampfkraftwerke umfassen in der Regel einen Dampferzeuger, eine Dampfturbine und einen elektrischen Generator. In solchen Dampfkraftwerken wird zur Frequenzstützung die Dampfturbine mit angedrosselten Frischdampfventilen und reduzierter Kesselleistung betrieben. Falls die Netzfrequenz sinkt wird die Drosselung aufgehoben und die Kesselleistung gesteigert. Durch das Öffnen der Frischdampfventile sinkt allerdings der Druck im Frischdampfsystem ab, wobei durch den absinkenden Druck kurzzeitig mehr Wasser verdampft wird als im stationären Betrieb bei dieser Kesselleistung. Dadurch steigt der Frischdampfmassenstrom an. Mit dem Frischdampfmassenstrom steigt auch die Turbinenleistung kurzzeitig an. Neben dem Öffnen des Frischdampfventils wird gleichzeitig die Kesselleistung gesteigert. Allerdings ist diese Änderung träge. Das bedeutet, dass es effektiv eine schnelle Leistungssteigerung durch Aufhebung der Drosselung gibt, die aber auch schnell wieder nachlässt.

Eine weitere mögliche Maßnahme zur kurzfristigen Leistungssteigerung ist es, bei reinen Dampfkraftwerken die Vorwärmstrecke ganz oder teilweise wegzuschalten. Dadurch wird der Massenstrom durch die Dampfturbine erhöht, was zu einer Erhöhung der elektrischen Leistung und einer Kompensation einer Leistungsreduktion führt, bedingt durch die langsame, aber dauerhafte Leistungssteigerung aus der Erhöhung der Kesselleistung. Zusammenfassend lässt sich sagen, dass mit der Kombination all dieser Effekte eine schnelle und anhaltende Leistungssteigerung realisiert werden kann, die in der Regel die vertraglichen Netzanforderungen erfüllen.

Durch Einspeisung der erneuerbaren Energien, wie beispielsweise Solarenergie oder Windenergie, führt dies zu höheren Fluktuationen im Netz. Dadurch gibt es auch zunehmend Forderungen, die Dampfturbine auch im Gas- und Dampfturbinenkraftwerk an der Frequenzstützung zu beteiligen. Es ist üblicherweise nicht gewünscht, dass in einem Gas- und Dampfturbinenkraftwerk die Gasturbine mit reduzierter Leistung betrieben wird. Obwohl die Steigerung der Gasturbinenleistung wesentlich schneller erfolgen kann als die Kesselleistung beim reinen Dampfkraftwerk, ist eine Beteiligung der Dampfturbine an der weiteren Leistungssteigerung wünschenswert. Darüber hinaus gilt es zu betrachten, das eine Vorwärmstrecke, ähnlich der bei einem Dampfkraftwerk vorhandenen, in einem Gas- und Dampfturbinenprozess nicht vorhanden ist.

Derzeit werden diese Anforderungen dadurch gelöst, dass bei Gas- und Dampfturbinenkraftwerken die Frischdampfventile vor der Hochdruck-Teilturbine angedrosselt werden. Allerdings sollten die Gasturbinen in Gas- und Dampfturbinenkraftwerken nicht dauerhaft mit reduzierter Leistung betrieben werden. Daher werden die Gasturbinen bei Volllast und die Dampfturbinen mit abgedrosselten Ventilen betrieben. Wird nun im Falle einer Leistungserhöhung die Drosselung aufgehoben, steigt die Leistung kurzfristig durch Ausspeichern an, allerdings bleibt dauerhaft nur der Leistungsgewinn der den Drosselverlusten entspricht. Eine weitere Beteiligung der Dampfturbine über diesen kurzzeitigen Effekt hinaus wurde bisher noch nicht berücksichtigt.

Das Dokument EP 2 098 691 A1 offenbart ein Verfahren zur Stützung einer Netzfrequenz einer Energieerneuerungsanlage umfassend eine Dampfturbine.

An dieser Stelle setzt die Erfindung an, deren Aufgabe es ist, ein verbessertes Verfahren beim Betrieb einer Energieerzeugungsanlage anzubieten.

Gelöst wird diese Aufgabe durch eine Verfahren zur Stützung einer Netzfrequenz einer Energieerzeugungsanlage umfassend eine Dampfturbine, wobei die Dampfturbine eine Hochdruck-Teilturbine und eine Mitteldruck-Teilturbine umfasst, wobei vor der Mitteldruck-Teilturbine ein Mitteldruck-Ventil angeordnet wird, wobei die Energieerzeugungsanlage mit ungedrosselten Hochdruck-Ventilen betrieben wird.

Die Erfindung geht daher von dem Gedanken aus, statt die Hochdruck-Ventile anzudrosseln die Mitteldruck-Ventile zu drosseln. Dies hat im Wesentlichen zwei Effekte. Zum einen wird die Leistungsabgabe der Hochdruck-Teilturbine dadurch kleiner, da die Expansion durch den steigenden Druck in der kalten Zwischenüberhitzung kleiner wird. Des Weiteren ist die Leistungsabgabe der Mitteldruck-Teilturbine kleiner, da Drosselverluste auf der Mitteldruckseite hinzukommen.

Der gewünschte Effekt ist, dass beispielsweise in einer Gas- und Dampfturbinenanlage die Gasturbine bei voller Leistung betrieben werden kann, wobei die Dampfturbine mit angedrosselten Mitteldruck-Ventilen und erhöhtem Zwischenüberhitzedruck betrieben wird. Bei abfallender Netzfrequenz kann die Drosselung der Mitteldruck-Ventile aufgehoben werden, wenn die Netzfrequenz abfällt, wodurch dauerhaft mehr Leistung zur Verfügung steht.

In den Unteransprüchen sind weitere vorteilhafte Weiterbildungen aufgeführt.

Ein erfindungsgemäßer Effekt ist, dass die Dampfturbine nun verstärkt an der Leistungssteigerung beteiligt und damit ins Netz schneller eine größere Leistung eingespeist werden kann. Die Folge ist, dass die Forderungen der Lastverteiler erfüllt werden können. Ein weiterer Effekt ist, dass der Gesamtwirkungsgrad steigt.

Im Wesentlichen kann das gleiche Verfahren auch für ein Lastabsenken angewandt werden, was aus Frequenzstützungssicht ebenfalls gefordert wird.

Die Erfindung wird anhand eines Ausführungsbeispiels näher erläutert.

### Es zeigt

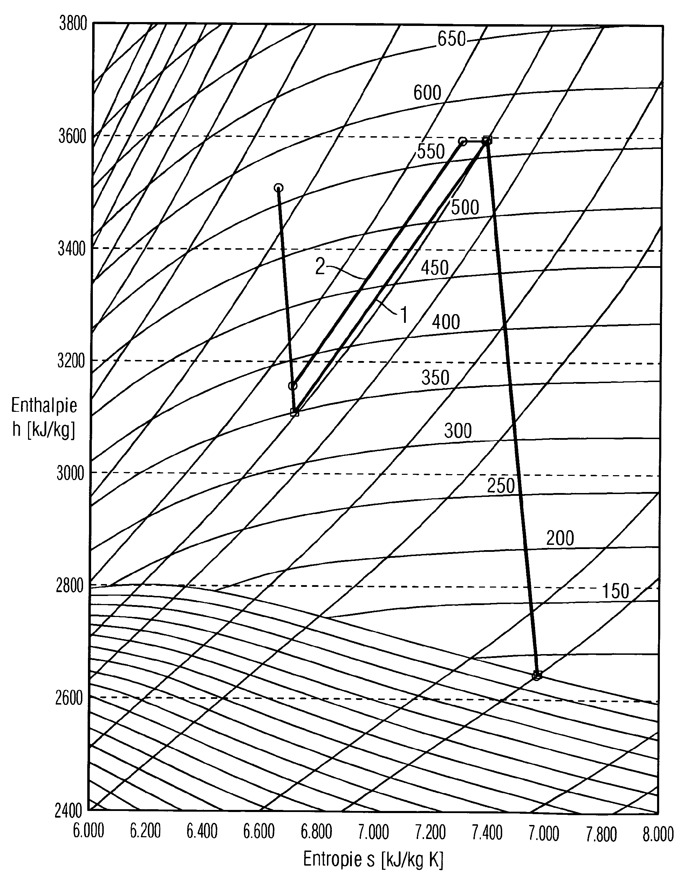

### die Figur ein HS-Diagramm.

Im Wesentlichen umfasst ein Gas- und Dampfturbinenkraftwerk eine Dampfturbine und eine Gasturbine, wobei in der Regel zwischen der Gas- und Dampfturbine ein elektrischer Generator drehmomentübertragend gekoppelt ist. Die Erfindung ist auch anwendbar auf Gas- und Dampfturbinenanlagen, die mehrere Wellen aufweisen. Ebenso ist die Erfindung auch anwendbar auf reine Dampfkraftwerke. Der aus einer Gasturbine ausströmende heiße Gasstrom wird dazu verwendet, in einem Dampferzeuger Dampf für die Dampfturbine zu erzeugen. Die Dampfturbine wird in der Regel in eine Hochdruck-, Mitteldruck- und Niederdruck-Teilturbine eingeteilt. Der Frischdampf strömt zunächst in die Hochdruck-Teilturbine. Nach der Hochdruck-Teilturbine strömt der Dampf durch einen Zwischenüberhitzer, wo der Dampf auf eine höhere Temperatur gebracht wird und anschließend in die Mitteldruck-Teilturbine strömt. Nach der Mitteldruck-Teilturbine strömt der Dampf in eine Niederdruck-Teilturbine, wobei nach der Niederdruck-Teilturbine der Dampf wieder zu Wasser in einem Kondensator umgewandelt wird.

Vor der Hochdruck-Teilturbine wird in der Frischdampfleitung ein Frischdampfventil angeordnet, das den Durchfluss durch die Frischdampfleitung regelt. Vor der Mitteldruck-Teilturbine wird ein Mitteldruck-Ventil angeordnet, das ebenfalls derart ausgebildet ist, dass dieses den Durchfluss durch eine Mitteldruck-Zuströmung zur Mitteldruck-Teilturbine regeln kann.

Die Gas- und Dampfturbinenanlage wird so mit angedrosselten Mitteldruck-Ventilen betrieben, wobei bei abfallender Netzfrequenz die Drosselung der Mitteldruck-Ventile aufgehoben wird. Dies unterstützt ein Verfahren zur Unterstützung einer Netzfrequenz einer Gas- und Dampfturbinenanlage, wobei die Gas- und Dampfturbinenanlage mit ungedrosselten Hochdruck-Ventilen betrieben wird. Im Wesentlichen wird die Gasturbine bei voller Leistung betrieben. Wird bei abfallender Netzfrequenz mehr Leistung benötigt, kann die Drosselung der Mitteldruck-Ventile aufgehoben werden und es steht dauerhaft mehr Leistung zur Verfügung.

Die Figur zeigt das entsprechende Enthalpie-Entropie-Diagramm der erfindungsgemäßen Gas- und Dampfturbinenanlage. Die Linie 1 zeigt eine Gas- und Dampfturbinenanlage gemäß dem Stand der Technik. Die Linie 2 zeigt einen geänderten Verlauf des HS-Diagramms der erfindungsgemäßen Gas- und Dampfturbinenanlage, wobei hier der Verlauf mit angedrosselten Mitteldruck-Ventilen dargestellt ist.

## Patentansprüche

1. Verfahren zur Stützung einer Netzfrequenz einer Energieerzeugungsanlage umfassend eine Dampfturbine,
wobei die Dampfturbine eine Hochdruck-Teilturbine und eine Mitteldruck-Teilturbine umfasst,
wobei vor der Mitteldruck-Teilturbine ein Mitteldruck-Ventil angeordnet wird,
wobei die Energieerzeugungsanlage mit ungedrosselten Hochdruck-Ventilen betrieben wird.

2. Verfahren nach Anspruch 1,
wobei die Energieerzeugungsanlage mit angedrosselten Mitteldruck-Ventilen betrieben wird und bei abfallender Netzfrequenz die Drosselung der Mitteldruck-Ventile aufgehoben wird.

3. Verfahren nach Anspruch 1 oder 2,
wobei die Energieerzeugungsanlage als Gas- und Dampfturbinenanlage ausgebildet ist.

4. Verfahren nach Anspruch 3,
wobei die Gasturbine im Wesentlichen bei voller Leistung betrieben wird.

5. Verfahren nach Anspruch 1 oder 2,
wobei die Energieerzeugungsanlage als Dampfkraftwerk ausgebildet ist.

6. Verfahren nach einem der vorhergehenden Ansprüche,
wobei die Mitteldruck-Teilturbine an eine Zwischenüberhitzereinheit strömungstechnisch angekoppelt ist.

## Claims

1. Method for supporting a grid frequency of a power generation plant comprising a steam turbine,
wherein the steam turbine comprises a high-pressure turbine section and an intermediate-pressure turbine section,
wherein an intermediate-pressure valve is arranged upstream of the intermediate-pressure turbine section,
wherein the power generation plant is operated with unthrottled high-pressure valves.

2. Method according to Claim 1,
wherein the power generation plant is operated with throttled intermediate-pressure valves and, if the grid frequency drops, the intermediate-pressure valves are unthrottled.

3. Method according to Claim 1 or 2,
wherein the power generation plant is formed as a combined cycle power plant.

4. Method according to Claim 3,
wherein the gas turbine is operated at essentially full power.

5. Method according to Claim 1 or 2,
wherein the power generation plant is formed as a steam power plant.

6. Method according to one of the preceding claims,
wherein the intermediate-pressure turbine section is fluidically connected to a reheater unit.

## Revendications

1. Procédé de soutien d'une fréquence du réseau d'une installation de production d'électricité comprenant une turbine à vapeur,
la turbine à vapeur comprenant une partie de turbine haute pression et une partie de turbine moyenne pression,
dans lequel on met une vanne de moyenne pression avant la partie de turbine moyenne pression,
dans lequel on fait fonctionner l'installation de production d'électricité avec des vannes de haute pression non étranglées.

2. Procédé suivant la revendication 1,
dans lequel on fait fonctionner l'installation de production d'électricité avec des vannes de moyenne pression étranglées et, si la fréquence du réseau s'abaisse, on fait cesser l'étranglement des vannes de moyenne pression.

3. Procédé suivant la revendication 1 ou 2,
dans lequel l'installation de production d'électricité est constituée sous la forme d'une installation de turbine à gaz et de turbine à vapeur.

4. Procédé suivant la revendication 3,
dans lequel on fait fonctionner la turbine à gaz sensiblement à pleine charge.

5. Procédé suivant la revendication 1 ou 2,
dans lequel l'installation de production d'électricité est constituée sous la forme d'une centrale à vapeur.

6. Procédé suivant l'une des revendications précédentes,
dans lequel la partie de turbine moyenne pression est couplée en technique des fluides à une unité de surchauffeur intermédiaire.
